# EUROPÄISCHE PATENTANMELDUNG

(11) **EP 3 715 573 A1**
(43) Veröffentlichungstag der Anmeldung: **30.09.2020**
(21) Anmeldenummer: 20164561.1
(22) Anmeldetag: 20.03.2020
(51) Int. Cl.: E05F 15/643, H02K 7/08, H02K 33/16, H02K 5/16

(54) **LINEARMOTOR ZUM BEWEGEN EINES VERRIEGELUNGSMITTELS, VERRIEGELUNGSEINRICHTUNG FÜR EINE SCHIEBETÜRANLAGE, SCHIEBETÜRANLAGE UND VERFAHREN ZUR HERSTELLUNG EINES LINEARMOTORS**

(30) Priorität: 29.03.2019 DE 102019108275
(71) Anmelder: dormakaba Deutschland GmbH, 58256 Ennepetal (DE)
(72) Erfinder: WAGNER, Martin, 58256 Ennepetal (DE); BUSCH, Sven, 58256 Ennepetal (DE)
(74) Vertreter: Balder IP Law, S.L.

(57) **Zusammenfassung**

Die Erfindung betrifft einen Linearmotor zum Bewegen eines Verriegelungsmittels (13) zwischen einer Freigabestellung und einer Verriegelungsstellung, umfassend ein Gehäuse (11), einen in dem Gehäuse (11) angeordneten Stator (21) und einen gegenüber dem Stator (21) translatorisch bewegbaren Läufer (24), wobei der Läufer (24) mittels mehrerer, insbesondere vier, an dem Stator (21) und/oder an dem Gehäuse (11) angeordneter Wälzlager (26) oder Gleitlager bewegbar gelagert ist.

## Beschreibung

Die Erfindung betrifft einen Linearmotor zum Bewegen eines Verriegelungsmittels zwischen einer Freigabestellung und einer Verriegelungsstellung. Ferner betrifft die Erfindung ein Verfahren zum Herstellen eines solchen Linearmotors. Weitere Gegenstände der Erfindung sind eine Verriegelungseinrichtung für eine Schiebetüranlage sowie eine Schiebetüranlage.

Anwendung finden kann die Erfindung in einer Verriegelungseinrichtung mit einem Verriegelungsmittel, welches zwischen einer Freigabestellung und einer Verriegelungsstellung bewegbar ist. Solche Verriegelungseinrichtungen kommen beispielsweise in Schiebetüranlagen zur Verriegelung von Schiebetürelementen zum Einsatz.

Bei Linearmotoren wirken oftmals relativ große Anziehungskräfte zwischen dem Stator und dem Läufer des Linearmotors. Diese Anziehungskräfte wirken in der Regel quer zur Bewegungsrichtung des Läufers und müssen durch geeignete Maßnahmen abgestützt müssen. Üblicherweise wird der Läufer daher in einer Führung über eine Gleit- oder Wälzlagerung gehalten, die in einem gewissen Abstand von dem Stator des Linearmotors, insbesondere von einem Statorkern und den Spulen des Stators, entfernt angeordnet ist. Hierdurch ergibt sich ein relativ sperriger Aufbau des Linearmotors, so dass die Verriegelungseinrichtung, in welcher der Linearmotor eingebaut wird, einen relativ großen Bauraum erfordert.

Vor diesem Hintergrund stellt sich die Aufgabe, einen möglichst kompakten Verriegelungsantrieb zum Bewegen eines Verriegelungsmittels anzugeben.

Zur Lösung der Aufgabe wird ein Linearmotor zum Bewegen eines Verriegelungsmittels zwischen einer Freigabestellung und einer Verriegelungsstellung vorgeschlagen, umfassend ein Gehäuse, einen in dem Gehäuse angeordneten Stator und einen gegenüber dem Stator translatorisch bewegbaren Läufer, wobei der Läufer mittels mehrerer, insbesondere vier, an dem Stator und/oder an dem Gehäuse angeordneter Wälzlager oder Gleitlager bewegbar gelagert ist.

Der erfindungsgemäße Linearmotor bildet einen kompakten Verriegelungsantrieb zum Bewegen eines Verriegelungsmittels. Aufgrund der Anordnung der Wälzlager oder Gleitlager an dem Stator und/oder an dem Gehäuse des Linearmotors kann ein Abstand zwischen dem Läufer und dem Stator reduziert werden. Hierdurch kann ein kleiner Luftspalt zwischen dem Stator und dem Läufer erhalten werden, wodurch sich die zusätzlichen Vorteile ergeben, dass der gesamten Linearmotor unempfindlicher gegenüber Toleranzen wird und dass die durch den Linearmotor erzeugbare Kraft erhöht wird.

Unter einem Linearmotor wird im Sinne der Erfindung ein elektrischer Linearmotor verstanden. Bevorzugt umfasst der Linearmotor einen translatorisch, insbesondere linear, bewegbaren Läufer. Vorteilhafterweise ist der Läufer gegenüber einem Stator des Linearmotors derart bewegbar gelagert angeordnet, dass ein Luftspalt zwischen dem Stator und dem Läufer konstant ist. Bevorzugt verlaufen die magnetischen Feldlinien in dem Luftspalt senkrecht zu einer Bewegungsrichtung des Läufers und/oder zu einer Kraftrichtung, in welcher eine durch den Linearmotor erzeugbare Kraft wirkt.

Gemäß einer vorteilhaften Ausgestaltung weisen die Wälzlager oder Gleitlager jeweils einen, insbesondere äußeren, Lagerring auf, an dem eine Abrollfläche des Läufers anliegt. Hierdurch kann die Montage des Läufers an dem Gehäuse und/oder dem Stator im Rahmen der Herstellung des Linearmotors vereinfacht werden. Bevorzugt ist ein innerer Lagerring der Wälzlager oder Gleitlager jeweils an einem Befestigungselement befestigt, welches an dem Stator und/oder dem Gehäuse angeordnet ist.

Bevorzugt ist es, wenn zwei der Wälzlager oder Gleitlager an einem gemeinsamen Befestigungselement, insbesondere einer Achse, befestigt sind, welche in einer Stator-Ausnehmung in dem Stator und/oder in einer Gehäuse-Ausnehmung in dem Gehäuse angeordnet ist. Hierdurch wird es im Rahmen der Herstellung des Linearmotor möglich, zunächst die Wälzlager oder Gleitlager an dem Befestigungselement zu befestigen und dieses dann zusammen mit den Wälzlagern oder Gleitlagern in die Stator-Ausnehmung und/oder die Gehäuse-Ausnehmung einzubringen.

Gemäß einer vorteilhaften Ausgestaltung ist vorgesehen, dass der Stator einen Statorkern mit drei, bevorzugt genau drei, Statorzähnen aufweist, die in einer Bewegungsrichtung des Läufers voneinander beabstandet sind, wobei ein erster Statorzahn der Statorzähne zwischen zwei zweiten Statorzähnen der Statorzähne angeordnet ist, wobei die beiden zweiten Statorzähne jeweils eine Stator-Ausnehmung umfassen, in welcher ein Befestigungselement, insbesondere eine Achse, angeordnet ist, an dem jeweils zwei der Wälzlager oder Gleitlager befestigt sind. Bei einem derartigen Linearmotor kann der Läufer zum Bewegen des Verriegelungsmittels zwischen der Verriegelungs- und der Freigabestellung zwischen zwei Endlagen umgeschaltet werden. Der Läufer kann in den beiden Endlagen einrasten und diese Rastposition auch gegen eine definierte äußere Krafteinwirkung halten, bis er durch Bestromen einer Spule des Stators umgeschaltet wird und in die andere Endlage wechselt. Insofern weist ein derartiger Linearmotor einen bistabilen Betrieb auf, wobei die Endlagen des Läufers mit der Verriegelungsstellung und der Freigabestellung des Verriegelungsmittels korrespondieren.

In diesem Zusammenhang ist es bevorzugt, wenn ein erster Statorzahn der Statorzähne, der zwischen zwei zweiten Statorzähnen der Statorzähne angeordnet ist, eine erste Zahnbreite aufweist, die größer ist als eine zweite Zahnbreite der zweiten Statorzähne. Unter der Zahnbreite wird die Erstreckung der Statorzähne entlang der Bewegungsrichtung des Läufers verstanden. Die zweite Statorzähne weisen bevorzugt eine identische zweite Zahnbreite auf.

Gemäß einer vorteilhaften Ausgestaltung weist der Läufer zwei, bevorzugt genau zwei, Permanentmagnete mit gegenläufiger Magnetisierungsrichtung auf.

Besonders bevorzugt weisen die Permanentmagnete eine identische Permanentmagnet-Breite auf, wobei ein Verhältnis der Permanentmagnet-Breite zu der ersten Zahnbreite größer ist als 1, bevorzugt größer ist als 1,1, besonders bevorzugt größer ist als 1,2, beispielsweise 1,4. Unter der Permanentmagnet-Breite wird die Erstreckung der Permanentmagnete in Bewegungsrichtung des Läufers verstanden.

Vorteilhaft ist es, wenn der Statorkern als Blechpaket ausgebildet ist. Das Blechpaket kann eine Vielzahl von Einzelblechen aufweisen, die zur Bildung des Blechpakets geschichtet angeordnet sind. Die Einzelbleche sind bevorzugt nicht gegeneinander isoliert. Die Einzelbleche umfassen bevorzugt jeweils Durchgangslöcher, die in geschichteter Anordnung eine oder mehrere Stator-Ausnehmungen bilden. Alternativ kann vorgesehen sein, dass der Statorkern als Frästeil oder als Gussteil ausgebildet ist. Alternativ kann vorgesehen sein, dass der Statorkern nicht als separates Teil sondern als Gehäuseunterteil ausgebildet ist.

Gemäß einer vorteilhaften Ausgestaltung weist das Gehäuse des Linearmotors einen ersten Anschlag für den Läufer in einer ersten Endlage und bevorzugt einen zweiten Anschlag für den Läufer in einer zweiten Endlage auf.

Eine bevorzugte Ausgestaltung sieht vor, dass der Läufer mindestens einen Anbindungsbereich für ein Betriebsart-Federelement aufweist, über welches der Läufer in eine Endlage vorspannbar ist. Über ein solches Betriebsart-Federelement kann der Läufer alternativ zu einem bistabilen Betrieb einen Betrieb des Linearmotors mit einer Vorzugsrichtung zu ermöglichen. Besonders vorteilhaft ist es, wenn der Läufer zwei Anbindungsbereiche, beispielsweise auf gegenüberliegenden Seiten des Läufers, umfasst, so dass wahlweise auf einer ersten Seite des Läufers oder auf einer gegenüberliegenden zweiten Seite des Läufers ein Betriebsart-Federelement angeordnet werden kann.

Ein weiterer Gegenstand der Erfindung ist eine Verriegelungseinrichtung für eine Schiebetüranlage, umfassend einen vorstehend beschriebenen Linearmotor und ein Verriegelungsmittel, welches zwischen einer Freigabestellung und einer Verriegelungsstellung hin und her bewegbar ist.

Bei der Verriegelungseinrichtung können dieselben Vorteile erreicht werden, wie sie bereits im Zusammenhang mit dem Linearmotor beschrieben worden sind.

Gemäß einer vorteilhaften Ausgestaltung der Verriegelungseinrichtung ist vorgesehen, dass der Linearmotor ein Betriebsart-Federelement aufweist,
- über welches der Läufer in eine Failsafe-Endlage vorspannbar ist, wobei der Läufer mit dem Verriegelungsmittel derart gekoppelt ist, dass das Verriegelungsmittel in der Failsafe-Endlage des Läufers in einer Freigabestellung angeordnet ist; oder
- über welches der Läufer in eine Failsecure-Endlage vorspannbar ist, wobei der Läufer mit dem Verriegelungsmittel derart gekoppelt ist, dass das Verriegelungsmittel in der Failsecure-Endlage des Läufers in einer Verriegelungsstellung angeordnet ist.
Diese alternativen Ausgestaltungen der Verriegelungseinrichtung ermöglichen jeweils einen Betrieb, in welchem der Läufer des Linearmotors im unbestromten Zustand in eine definierte Endlage verbracht wird, so dass sich das Verriegelungsmittel entweder in seiner Freigabestellung oder in seiner Verriegelungsstellung befindet.

Die Erfindung betrifft ferner eine Schiebetüranlage umfassend einen Türantrieb mit einem Zugmittel, insbesondere einem Riemen, einem Seil oder einer Kette, ein Schiebetürlaufwerk mit einem verfahrbaren Laufwagen für ein Schiebetürelement, welcher mit dem Zugmittel gekoppelt und ausgehend von einer Schließposition über eine Wegstrecke in zumindest eine vorbestimmte Offenposition verfahrbar ist, und eine Verriegelungseinrichtung zur Verriegelung des Türantriebs wie vorstehend beschrieben.

Bei der Schiebetüranlage können dieselben Vorteile erreicht werden, wie sie bereits im Zusammenhang mit dem Linearmotor beschrieben worden sind.

Gemäß einer vorteilhaften Ausgestaltung der Schiebetüranlage ist vorgesehen, dass ein Verriegelungsabschnitt des Verriegelungsmittels in der Verriegelungsstellung kraft- und/oder formschlüssig mit dem Zugmittel zusammenwirkt, so dass der mit dem Zugmittel gekoppelte Laufwagen arretiert ist. Bei einer derartigen Schiebetüranlage kann der Türantrieb durch direktes Zusammenwirken des Verriegelungsmittels, insbesondere des Verriegelungsabschnitts des Verriegelungsmittels, mit dem Zugmittel verriegelt werden.

In der Freigabestellung gibt das Verriegelungsmittel bevorzugt das Zugmittel frei, so dass das Zugmittel bewegbar ist. Insofern besteht in der Freigabestellung bevorzugt kein Kraft- und/oder Formschluss zwischen dem Verriegelungsmittel und dem Zugmittel. Das Zugmittel ist bevorzugt als endloses Zugmittel ausgebildet. Bei dem Zugmittel kann es sich um einen Riemen, beispielsweise einen Flachriemen, Zahnriemen oder Keilriemen handeln. Alternativ kann das Zugmittel als Kette oder Seil ausgebildet sein.

Die Verriegelungseinrichtung kann beispielsweise im Bereich eines Zugmittelantriebs des Türantriebs zum Antrieb des Zugmittels angeordnet sein. Bevorzugt ist eine Steuereinrichtung des Türantriebes ebenfalls im Bereich des Zugmittelantriebs angeordnet, so dass kurze Verkabelungen zwischen der Steuereinrichtung und der Verriegelungseinrichtung bzw. dem Zugmittelantrieb ermöglicht werden.

Ein weiterer Gegenstand der Erfindung ist ein Verfahren zum Herstellen eines Linearmotors zum Bewegen eines Verriegelungsmittels zwischen einer Freigabestellung und einer Verriegelungsstellung, wobei ein Gehäuse bereitgestellt wird und wobei in dem Gehäuse ein Stator sowie ein gegenüber dem Stator translatorisch bewegbaren Läufer angeordnet wird, wobei der Läufer mittels mehrerer, insbesondere vier, an dem Stator und/oder an dem Gehäuse angeordneter Wälzlager oder Gleitlager bewegbar gelagert wird.

Bei dem Verfahren können dieselben Vorteile erreicht werden, wie sie bereits im Zusammenhang mit dem Linearmotor beschrieben worden sind.

Eine vorteilhafte Ausgestaltung des Verfahrens sieht vor, mehrere Einzelbleche auf mindestens ein gemeinsames Befestigungselement, aufgesteckt werden, um einen Statorkern des Stators zu bilden. Das Befestigungselement kann beispielsweise als Achse ausgebildet sein. Bevorzugt werden die Einzelbleche auf mehrere, insbesondere genau zwei, Befestigungselemente aufgesteckt. Es kann ein Statorkern nach Art eines Blechpakets gebildet werden, der Befestigungsbereich für die Wälzlager oder Gleitlager bereitstellt.

Bevorzugt ist es, wenn die Wälzlager oder Gleitlager auf freien Enden des mindestens einen Befestigungselements bzw. der mehreren Befestigungselemente aufgebracht werden. Hierdurch kann einerseits die Anbindung der Wälzlanger oder Gleitlager an den Stator, insbesondere den Statorkern, erfolgen. Zudem können die Einzelbleche aber auch durch die an den freien Enden angeordneten Wälzlager oder Gleitlager in Ihrer Lage entlang des Befestigungselements fixiert werden.

Bevorzugt wird der Stator zusammen mit den Befestigungselementen und den an den Befestigungselementen angeordneten Wälzlagern oder Gleitlagern in eine oder mehrere Gehäuse-Ausnehmungen in dem Gehäuse, insbesondere in einem ersten Gehäuseteil eingelegt. Bevorzugt wird das Gehäuse dann, beispielsweise durch befestigen eines zweiten Gehäuseteils an dem ersten Gehäuseteil, geschlossen, wobei die Befestigungselemente zwischen den beiden Gehäuseteilen festgelegt, beispielsweise geklemmt werden. Hierdurch ist eine werkzeuglose Montage des Stators in dem Gehäuse möglich.
Nachfolgend sollen weitere Vorteile und Einzelheiten der Erfindung anhand den in den Zeichnungen dargestellten Ausführungsbeispielen erläutert werden. Hierin zeigt
- Fig. 1: eine Schiebetüranlage in einer schematischen Darstellung;
- Fig. 2a: eine Verriegelungseinrichtung in einer perspektivischen Darstellung;
- Fig. 2b: die Verriegelungseinrichtung nach Fig. 2a in einer perspektivischen Schnittdarstellung;
- Fig. 2c: die Verriegelungseinrichtung nach Fig. 2a in einer Schnittdarstellung;
- Fig. 3a: den Verriegelungsantrieb der Verriegelungseinrichtung nach Fig. 2a in einer perspektivischen Darstellung;
- Fig. 3b: den Verriegelungsantrieb nach Fig. 3a ohne Gehäuse in einer perspektivischen Darstellung;
- Fig. 3c: den Verriegelungsantrieb nach Fig. 3a in einer perspektivischen Schnittdarstellung;
- Fig. 3d: den Verriegelungsantrieb nach Fig. 3a in einer Schnittdarstellung;
- Fig. 3e: den Verriegelungsantrieb nach Fig. 3a in einer Seitenansicht;
- Fig. 4a: den Stator des Verriegelungsantriebs nach Fig. 3a in einer perspektivischen Darstellung;
- Fig. 4b: den Stator nach Fig. 4a in einer perspektivischen Schnittdarstellung;
- Fig. 4c: den Stator nach Fig. 4a in einer ersten Seitenansicht;
- Fig. 4d: den Stator nach Fig. 4a in einer zweiten Seitenansicht;
- Fig. 5a: den Läufer des Verriegelungsantriebs nach Fig. 3a in einer perspektivischen Darstellung;
- Fig. 5b: den Läufer nach Fig. 5a in einer perspektivischen Schnittdarstellung;
- Fig. 5c: den Läufer nach Fig. 5a in einer gegenüber der Fig. 5a gedrehten perspektivischen Darstellung;
- Fig. 6a: den Verriegelungsantrieb nach Fig. 3a in einer Schnittdarstellung, wobei eine erste Betriebsart-Feder eingesetzt ist;
- Fig. 6b: den Verriegelungsantrieb nach Fig. 3a in einer Schnittdarstellung, wobei eine zweite Betriebsart-Feder eingesetzt ist;
- Fig. 7a: die Verriegelungseinrichtung nach Fig. 2a in einer perspektivischen Darstellung mit entferntem Verriegelungsmittel;
- Fig. 7b: die Verriegelungseinrichtung nach Fig. 7a in einer perspektivischen Schnittdarstellung;
- Fig. 8a: die Verriegelungseinrichtung nach Fig. 2a in einer Draufsicht mit entferntem Gehäuseoberteil, wobei sich das Verriegelungsmittel in einer Freigabestellung befindet;
- Fig. 8b: die Verriegelungseinrichtung nach Fig. 8a, wobei sich das Verriegelungsmittel in einer Verriegelungsstellung befindet;
- Fig. 9a: die Verriegelungseinrichtung nach Fig. 8b in einer teilweisen Schnittdarstellung;
- Fig. 9b: die Verriegelungseinrichtung nach Fig. 9a in einer teilweisen Schnittdarstellung, wobei die Stellung des Verriegelungsabschnitts gegenüber der Darstellung in Fig. 9a verändert ist;
- Fig. 10a-f: verschiedene Darstellungen einer Verriegelungseinrichtung gemäß einem alternativen Ausführungsbeispiel;
- Fig. 11a-c: verschiedene Darstellungen einer Verriegelungseinrichtung gemäß einem weiteren, alternativen Ausführungsbeispiel;
- Fig. 12a: eine schematische Darstellung eines Zugmittels und eines Verriegelungsmittels in einer Freigabestellung;
- Fig. 12b: eine schematische Darstellung eines Zugmittels und eines Verriegelungsmittels in einer Zwischenstellung zwischen der Freigabestellung und der Verriegelungsstellung, in der ein Formschluss nicht möglich ist;
- Fig. 12c: eine schematische Darstellung eines Zugmittels und eines Verriegelungsmittels in einer Verriegelungsstellung;
- Fig. 13: einen Stellungssensor in einer perspektivischen Darstellung;
- Fig. 14: ein Ablaufdiagramm eines ersten Ausführungsbeispiels eines Verfahrens zum Betrieb einer Schließanlage;
- Fig. 15: ein Ablaufdiagramm eines zweiten Ausführungsbeispiels eines Verfahrens zum Betrieb einer Schließanlage;
- Fig. 16: ein Ablaufdiagramm eines dritten Ausführungsbeispiels eines Verfahrens zum Betrieb einer Schließanlage; und
- Fig. 17: ein weiteres Ausführungsbeispiel eines Führungskulisse einer Kulissenmechanik.

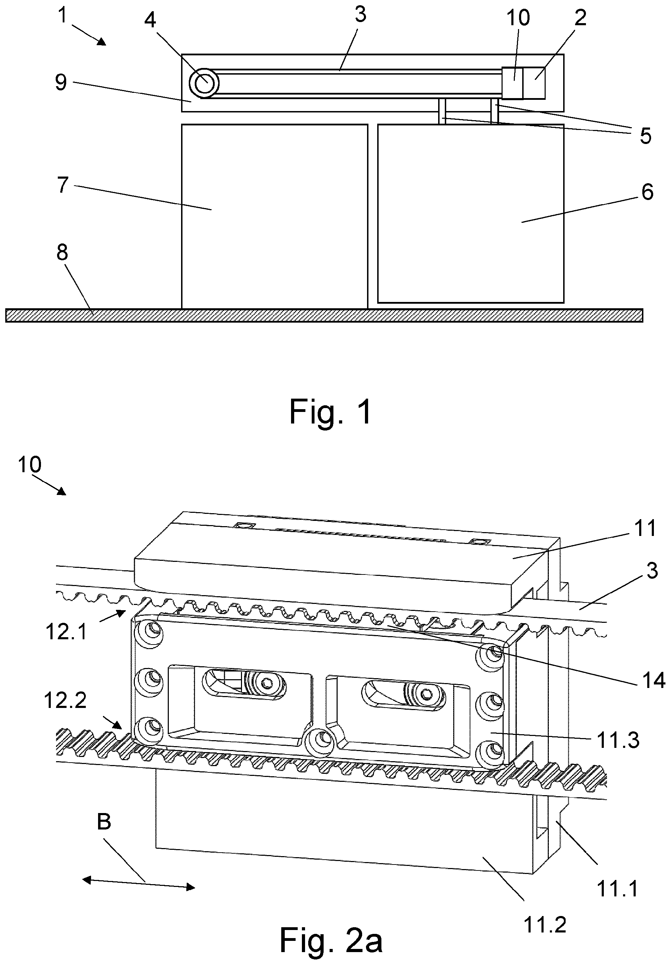

In der **Fig. 1** ist eine Schiebetüranlage 1 in einer schematischen Darstellung gezeigt. Die Schiebetüranlage 1 umfasst ein Schiebetürelement 6 sowie einen Türantrieb 9, über welchen das Schiebetürelement 6 motorisch bewegt werden kann, beispielsweise zwischen einer in Fig. 1 gezeigten Schließposition, in welcher das Schiebetürelement 6 in einer Türöffnung angeordnet ist, und einer Offenposition, in welcher das Schiebetürelement 6 zumindest teilweise hinter einem Wandelement 7 angeordnet ist und dabei die Türöffnung freigibt. Gemäß dem Ausführungsbeispiel ist der Türantrieb 9 oberhalb des Schiebetürelements 6 der Schiebetüranlage 1 angeordnet. Es ist aber auch denkbar, dass der Türantrieb 9 alternativ unterhalb des Schiebetürelements 6 angeordnet ist, beispielsweise zwischen dem Schiebetürelement 6 und einem Boden 8 oder innerhalb des Bodens 8 unterhalb dem Schiebetürelement 6.

Der Türantrieb 9 der Schiebetüranlage 1 umfasst einen Elektromotor 2 und ein Zugmittel 3. Das Zugmittel 3 ist mit dem Elektromotor 2, insbesondere mit einer Maschinenwelle oder einem Ritzel des Elektromotors 2 derart gekoppelt, dass das Zugmittel 3 durch den Elektromotor 2 angetrieben werden kann. Das Zugmittel 3 ist als endloses Zugmittel 3 ausgestaltet. Gemäß dem Ausführungsbeispiel handelt es sich bei dem Zugmittel 3 um einen als Zahnriemen ausgestalteten Riemen. Alternativ kann das Zugmittel 3 als Seil oder als Kette oder als Flachriemen oder als Keilriemen ausgestaltet sein. Das Zugmittel 3 ist um ein Umlenkelement 4, beispielsweise eine Umlenkrolle, ein Umlenkrad oder ein Umlenkritzel geführt. Das Umlenkelement 4 ist auf einer Seite des Türantriebs 9 angeordnet, die dem Elektromotor 2 gegenüberliegt.

Ein weiteres Element der Schiebtüranlage ist ein Schiebetürlaufwerk mit einem verfahrbaren Laufwagen 5 für das Schiebetürelement 6. Der verfahrbare Laufwagen 5 ist mit dem Zugmittel 3 des Türantriebs 9 derart gekoppelt, dass der Laufwagen 5 zusammen mit dem Schiebetürelement 6 ausgehend von der in Fig. 1 gezeigten Schließposition über eine Wegstrecke in zumindest eine vorbestimmte Offenposition verfahrbar ist.

Bei der Schiebetüranlage gemäß Fig. 1 ist zudem eine Verriegelungseinrichtung 10 zur Verriegelung des Türantriebs 9 vorgesehen. Die Verriegelungseinrichtung 10 weist ein Verriegelungsmittel auf, welches zwischen einer Freigabestellung und einer Verriegelungsstellung hin und her bewegbar ist. In der Freigabestellung ist das Zugmittel 3 freigegeben und kann durch den Elektromotor 2 angetrieben werden. In der Verriegelungsstellung wird ein Verriegelungsabschnitt des Verriegelungsmittels kraft- und/oder formschlüssig mit dem Zugmittel 3 zusammen, so dass der mit dem Zugmittel 3 gekoppelte Laufwagen 5 und damit auch das Schiebetürelement 6 arretiert ist. Es ist nicht erforderlich, die Verriegelungseinrichtung 10 im Bereich des Elektromotors 2 oder im Bereich des Umlenkelements 4 anzuordnen, so dass die Verriegelungseinrichtung an einer frei wählbaren Stelle entlang des Zugmittels 3 angeordnet werden kann, beispielsweise - wie in Fig. 1 gezeigt - neben dem Elektromotor 2.

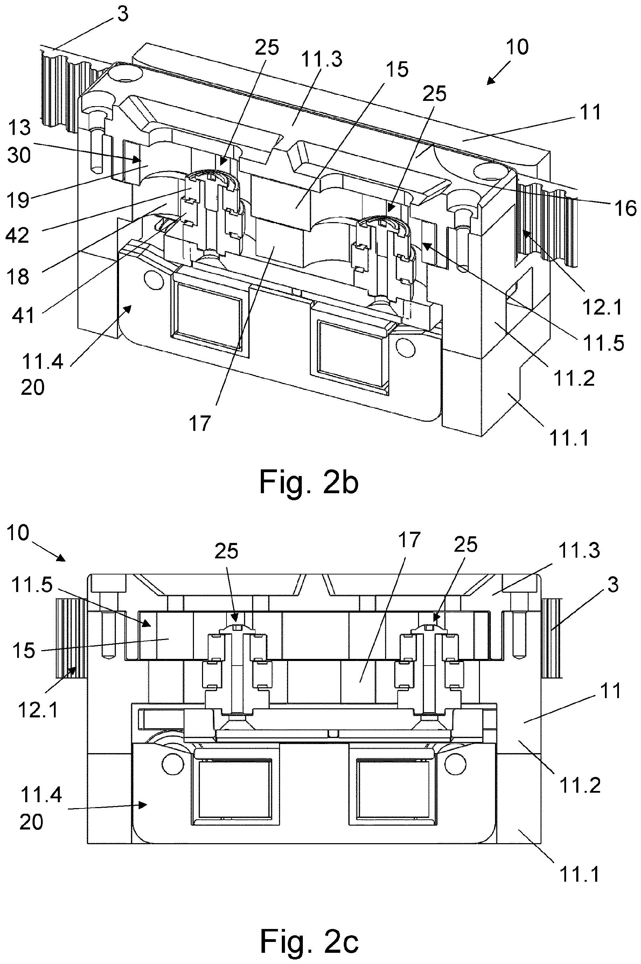

Die Darstellungen in **Fig. 2a**, **Fig. 2b** und **Fig. 2c** zeigen eine Verriegelungseinrichtung 10, die bei der Schiebetüranlage nach Fig. 1 Verwendung finden kann. Die Verriegelungseinrichtung 10 umfasst ein Gehäuse 11, welches zwei Zugmittel-Ausnehmungen 12.1, 12.2 aufweist, in welchen das als Zahnriemen ausgebildete Zugmittel 3 angeordnet werden kann. An einer Innenkontur einer ersten Zugmittel-Ausnehmung 12.1 ragt der Verriegelungsabschnitt 14 des bewegbaren Verriegelungsmittels 13 aus dem Gehäuse 10 heraus. In der in Fig. 2a gezeigten Verriegelungsstellung wirkt der Verriegelungsabschnitt 14 kraftund formschlüssig mit dem Zugmittel 3 zusammen. Dabei bildet die dem Verriegelungsabschnitt 14 gegenüberliegende Innenkontur der ersten Zugmittel-Ausnehmung 12.1 einen Anschlag 16 für das Zugmittel 3. In der Verriegelungsstellung des Verriegelungsmittels 13 drückt dieses das Zugmittel 3 gegen den Anschlag 16, so dass das Zugmittel 3 in Kontakt mit dem Anschlag 16 steht.

Der Verriegelungsabschnitt 14 weist mehrere Zähne auf, deren Außenkontur an die Außenkontur der Zähne des Zahnriemens angepasst ist. In der Verriegelungsstellung befinden sich diese Zähne des Verriegelungsabschnitts 14 in Eingriff mit den Zähnen des Zugmittels 3.

Den Darstellungen in Fig. 2a-c ist ferner zu entnehmen, dass das Gehäuse 11 einen mehrteiligen Aufbau aufweist. Das mehrteilige Gehäuse 11 umfasst ein erstes Gehäuseteil 11.1, welches einen ersten Gehäuseinnenraum 11.4 bildet, in dem ein Verriegelungsantrieb 20 angeordnet ist. Ein zweites Gehäuseteil 11.2 weist eine Gehäusewand 17 auf, die den ersten Gehäuseinnenraum 11.4 von einem zweiten Gehäuseinnenraum 11. 5 trennt. In dem zweiten Gehäuseinnenraum 11.5, der von dem zweiten Gehäuseteil 11.2 und dem dritten Gehäuseteil 11.3 umschlossen wird, ist eine Verriegelungsmechanik 30 angeordnet, die unter anderem das Verriegelungsmittel 13 umfasst.

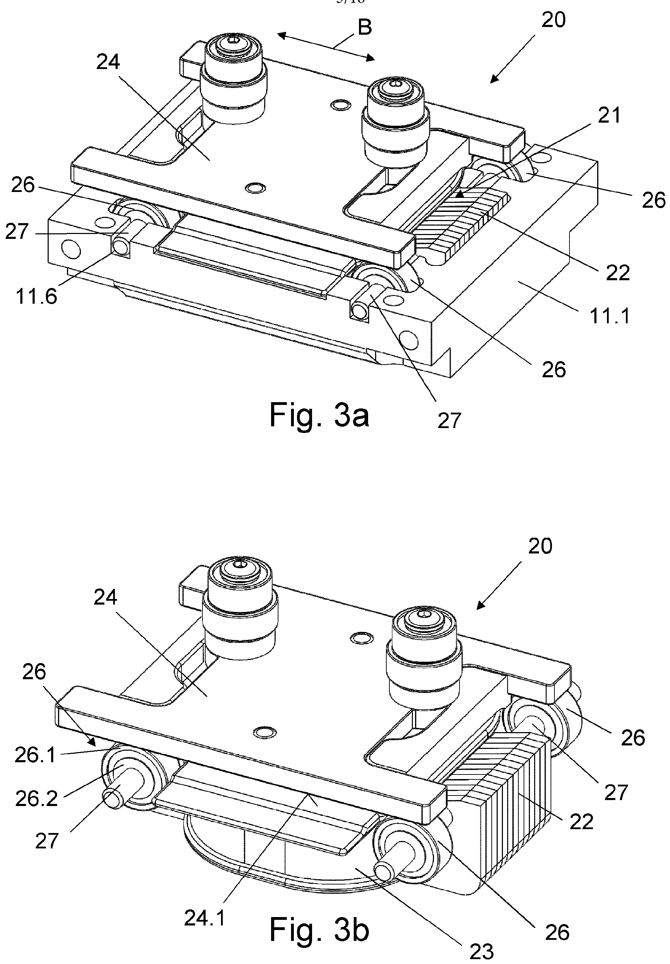

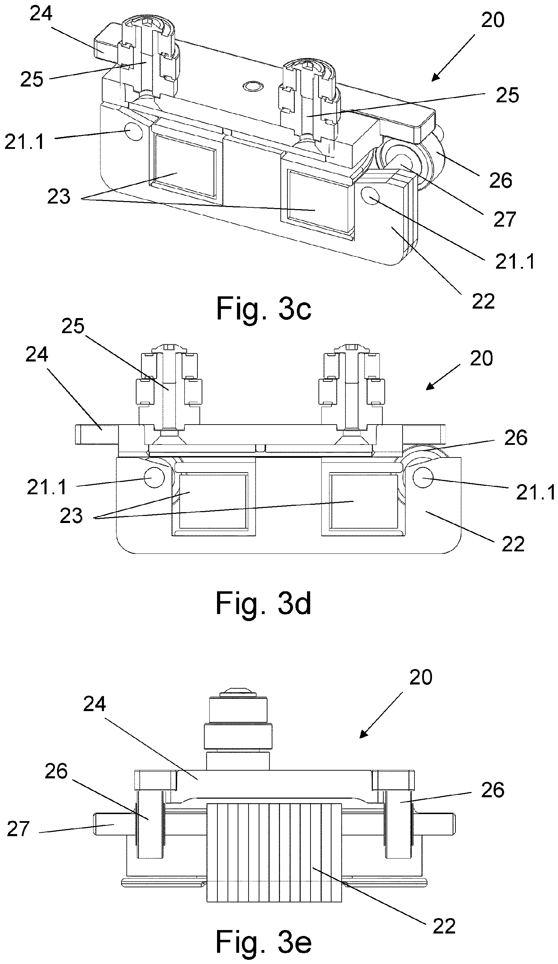

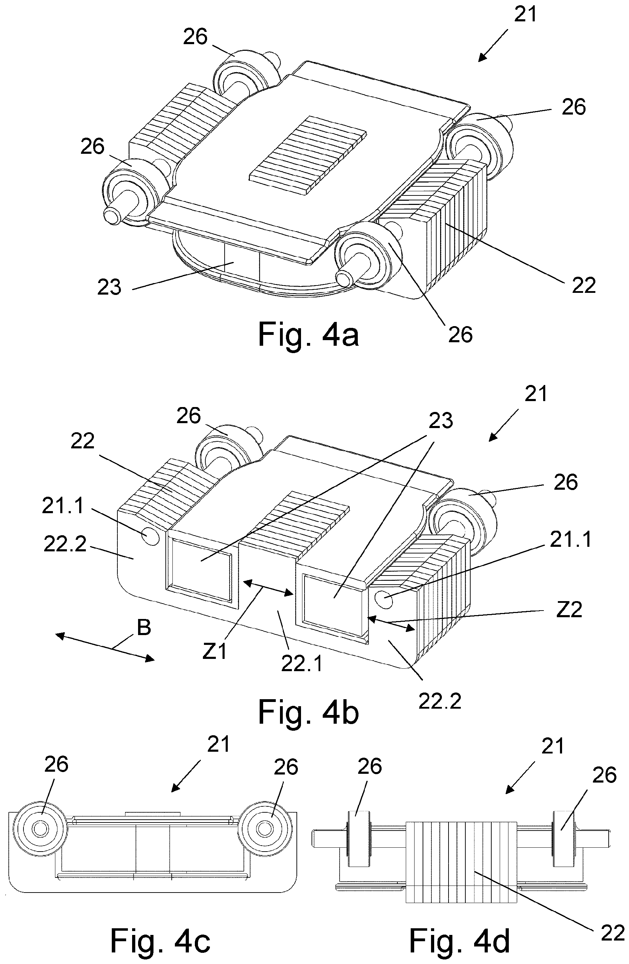

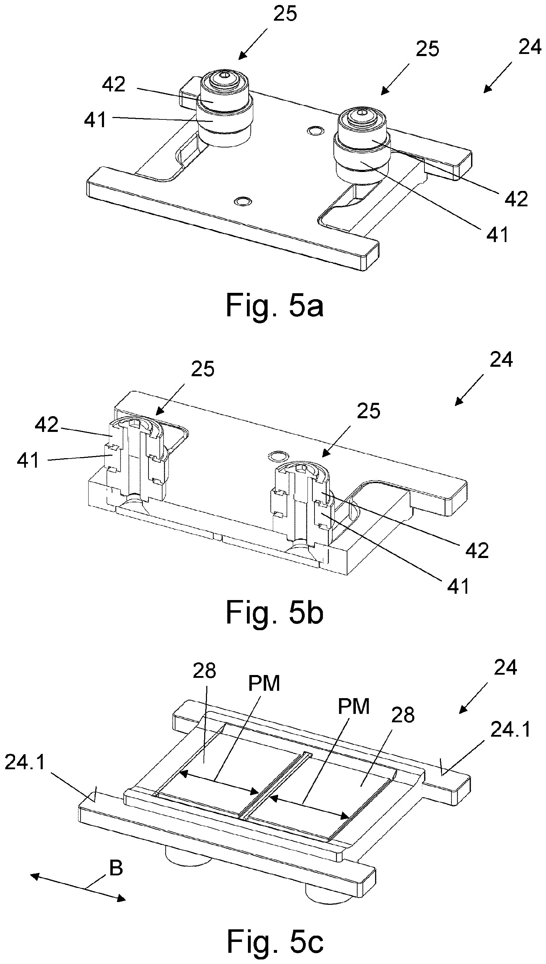

Die Darstellungen in **Fig. 3a****-e** zeigen Einzelheiten des Verriegelungsantriebs der Verriegelungseinrichtung 10. Der Verriegelungsantrieb ist als Linearmotor 20 ausgebildet. Das Gehäuse 11, insbesondere das erste und das zweite Gehäuseteil 11.1, 11.2 der Verriegelungseinrichtung 10 bilden ein Gehäuse des Linearmotors 20. Der Linearmotor 20 weist zudem einen in dem Gehäuse 11 angeordneten Stator 21 und einen gegenüber dem Stator 21 translatorisch bewegbaren Läufer 24 auf, die nachfolgend noch anhand der Darstellungen in Fig. 4 und 5 erläutert werden.

Wie den Darstellungen in Fig. 3a-e entnommen werden kann, ist der Läufer 24 mittels mehrerer, hier genau vier, an dem Stator 21 und/oder an dem Gehäuse 11 angeordneter Wälzlager 26 bewegbar gelagert. Über die Wälzlager 26 ist der Läufer 24 in einer Richtung parallel zur Bewegungsrichtung B des Zugmittels 3 bewegbar, vgl. Fig. 2a. Die Wälzlager 26 weisen jeweils einen inneren Lagerring 26.1 und einen gegenüber dem inneren Lagerring 26.1 drehbaren äußeren Lagerring 26.2 auf, der an einer Abrollfläche 24.1 des Läufers 24 anliegt. Der innere Lagerring 26.1 der Wälzlager 26 ist jeweils an einem Befestigungselement 27 befestigt, das als Achse ausgebildet ist. Insofern sind jeweils zwei Wälzlager 26 an einem gemeinsamen Befestigungselement 27 befestigt. Die Befestigungselemente 27 sind in einer Stator-Ausnehmung 21.1 in dem Stator 21 sowie in einer Gehäuse-Ausnehmung 11.6 in dem Gehäuse 11 angeordnet.

Anhand der Darstellungen in **Fig. 4a****-d** sollen nachfolgend Einzelheiten des Stators 21 des Linearmotors 20 erläutert werden. Der Stator 21 umfasst einen Statorkern 22, der als Blechpaket ausgebildet ist. Das Blechpaket ist aus mehreren Einzelblechen gebildet, die einen identischen Querschnitt, hier einen E-förmigen Querschnitt, aufweisen. Die Einzelbleche sind bevorzugt aus einem weichmagnetischen Material , beispielsweise aus Eisen oder Stahl, ausgebildet. Bevorzugt sind die Einzelbleche nicht gegeneinander isoliert. Der Statorkern 22 bildet insgesamt genau drei Statorzähne 22.1, 22.2 aus, die in der Bewegungsrichtung B des Läufers 24, also auch in Bewegungsrichtung B des Zugmittels 3 voneinander beabstandet angeordnet sind. Ein erster Statorzahn 22.1 ist zwischen zwei zweiten Statorzähnen 22.2 angeordnet. Zwischen dem ersten Statorzahn 22.1 und den beiden zweiten Statorzähnen 22.2 ist jeweils eine Spulenaufnahme gebildet, in welcher die Spule 22 des Stators 21 aufgenommen ist. Der erste Statorzahn 22.1 weist eine erste Zahnbreite Z1 auf, die größer ist als eine zweite Zahnbreite Z2 der zweiten Statorzähne 22.2. Die beiden zweiten Statorzähne 22.2 umfassen jeweils eine Stator-Ausnehmung 21.2, in welcher jeweils eines der als Achsen ausgebildeten Befestigungselemente 27 angeordnet ist. Die Ausnehmungen 21.1 sind jeweils als kreisförmige Ausnehmungen in dem Blechpaket des Statorkerns 22 bzw. der Einzelbleche des Statorkerns 22 ausgebildet. Zudem ist an den freien Enden der zweiten Statorzähne 22.2 jeweils eine Fase vorgesehen, die an einer Kante des jeweiligen zweiten Statorzahn 22.2 angeordnet ist, die dem ersten Statorzahn 22.1 zugewandt ist.

Zur Herstellung des Stators können die Einzelbleche des Statorkerns 22 auf die Befestigungselemente 27 aufgesteckt werden. In einem weiteren Schritt des Herstellungsverfahrens können die Wälzlager 26 auf die freien Enden der Befestigungselemente 17 aufgebracht werden. Der Zusammenbau aus Statorkern 22, Befestigungselementen 27 und Wälzlagern 26 kann dann in das Gehäuse 11, insbesondere in eine Stator-Aufnahme des Gehäuses 11 eingebracht werden. Bevorzugt wird vor dem Einbringen in das Gehäuse die Spule 23 mit dem Statorkern 22 verbunden. Alternativ kann die Spule 23 nach dem Einbringen des Statorkerns 22 in das Gehäuse 11 mit dem Statorkern 22 verbunden werden.

In **Fig. 5a****-c** ist der Läufer 24 des Linearmotors 20 gezeigt. Der Läufer 24 ist plattenförmig ausgebildet und weist eine Unterseite auf, die im zusammengebauten Zustand des Linearmotors 20 dem Stator 22 zugewandt ist. Der Läufer 24 ist bevorzugt aus einem weichmagnetischen Material ausgebildet, beispielsweise aus Eisen oder Stahl.

An der Unterseite ist die eine bzw. mehrere Abrollflächen 24.1 für die Wälzlager 26 vorgesehen, vgl. Fig. 5c. An der Unterseite des Läufers sind ferner mehrere, hier genau zwei, Permanentmagnete 28 angeordnet. Die Permanentmagnete 28 sind in der Bewegungsrichtung B des Läufers 24 bzw. des Zugmittels 3 beabstandet voneinander vorgesehen und weisen gegenläufige Magnetisierungsrichtungen auf. Die Magnetisierungsrichtungen der beiden Permanentmagnete 28 sind senkrecht zu der Oberfläche der Unterseite, also senkrecht zu den Abrollflächen 24.1, ausgerichtet. Beide Permanentmagnete 28 haben eine identische Permanentmagnet-Breite PM. Diese Permanentmagnet-Breite PM ist derart gewählt, dass ein Verhältnis der Permanentmagnet-Breite PM zu der ersten Zahnbreite Z1 größer ist als 1, bevorzugt größer ist als 1,1, besonders bevorzugt größer ist als 1,2, beispielsweise 1,4. Durch die Lagerung des Läufers 24 mittels der Wälzlager 26 kann sichergestellt werden, dass die Permanentmagnete 28 des Läufers 24 durch einen Luftspalt von dem Statorkern 22 getrennt sind, vgl. z.B. Fig. 3d.

An einer der Unterseite gegenüberliegenden Oberseite des Läufers 24 sind zwei Steuerelemente 25 vorgesehen, die als senkrecht von dem Läufer 24 abstehende Achsen ausgebildet sind, vgl. Fig. 5a und Fig. 5b. Über diese Steuerelemente 25 wird die Verriegelungsmechanik 30 der Verriegelungseinrichtung 10 gesteuert. An den Steuerelementen 25 ist jeweils ein erstes Führungswälzlager 41 und ein oberhalb des ersten Führungswälzlagers angeordnetes, zweites Führungswälzlager 42 befestigt. Das erste Führungswälzlager 41 ist bei dem Linearmotor 20 in einer als Langloch ausgebildeten Führungsöffnung 18 in der Gehäusewand 17 aufgenommen. Das erste Führungswälzlager 41, insbesondere ein gegenüber dem Steuerelement 25 drehbarer Lagerring des ersten Führungswälzlagers 41 ist an einer Innenkontur der Führungsöffnung 18 abrollbar, vgl. z.B. Fig. 2b, 2c. Im zusammengebauten Zustand der Verriegelungseinrichtung 10 wirkt das zweite Führungswälzlager 42 des Steuerelements mit dem Verriegelungsmittel 13 zusammen. Hierzu ist das zweite Führungswälzlager 42 in einer Führungskulisse 19 des Verriegelungsmittels 13 aufgenommen. Dabei kann ein gegenüber dem Steuerelement 25 drehbarer Lagerring des zweiten Führungswälzlagers 42 an einer Innenkontur der Führungskulisse 19 abrollen, vgl. z.B. Fig. 2b, 2c.

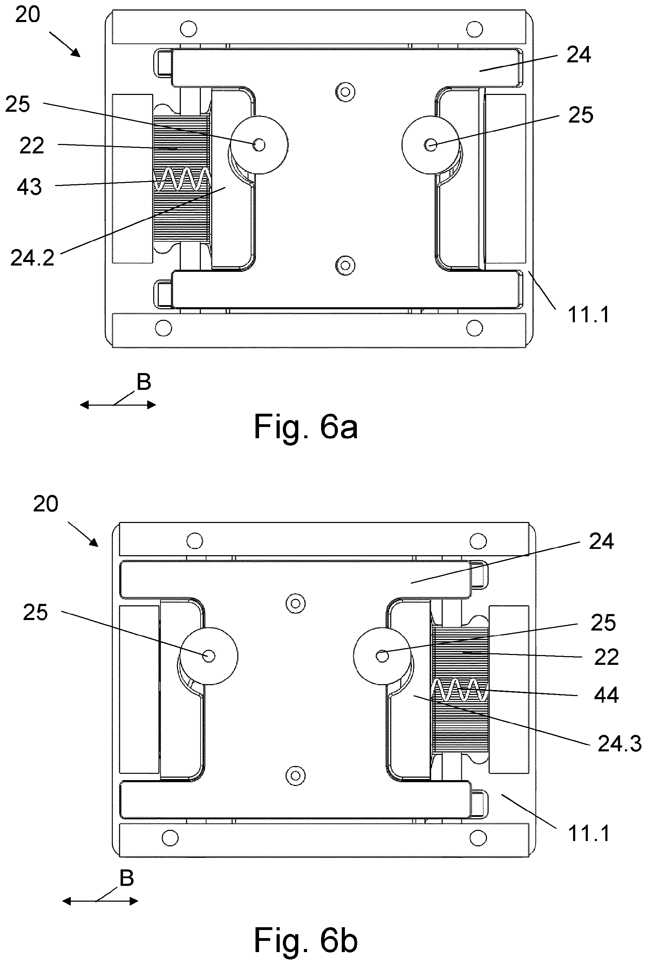

Die Darstellungen in **Fig. 6a** und **Fig. 6b** zeigen jeweils eine Draufsicht auf den Linearmotor 20 der Verriegelungseinrichtung 10, insbesondere auf die Oberseite des Läufers 24 des Linearmotors 20. Die beiden Darstellungen zeigen zwei Endlagen des Läufers 24, die mit der Freigabestellung und der Verriegelungsstellung des Verriegelungsmittels 13 korrespondieren. Nimmt der Läufer 24 die in Fig. 6a gezeigte, erste Stellung ein, so befindet sich das mit dem Läufer 24 gekoppelte Verriegelungsmittel 13 in seiner Verriegelungsstellung. Befindet sich der Läufer 24 in der in Fig. 6b gezeigten, zweiten Stellung, so ist das Verriegelungsmittel 13 in seiner Freigabestellung angeordnet. Der Linearmotor 20 kann zum Schalten des Verriegelungsmittels 13 zwischen der Freigabe- und der Verriegelungsstellung ohne Federkraft stabil in den gezeigten Endlagen einrasten und diese Endlage auch gegen eine definierte äußere Krafteinwirkung halten. Durch Bestromen der Spule kann zwischen den beiden Endlagen umgeschaltet werden. Insofern ermöglicht der Linearmotor 20 einen bistabilen Betrieb.

Der Linearmotor 20 ermöglicht im Vergleich zu einem Hub- oder Haftmagnet einen größeren Hubbereich des Läufers 24 bei gleichzeitig großer Kraft über den Hubbereich. Insofern kann der Linearmotor im Vergleich zu einem Hub- oder Haftmagnet eine wesentlich höhere mechanische Arbeit bei gleichem Bauvolumen verrichten. Ferner weist der Linearmotor 20 einen geringeren Energiebedarf auf, da die Spule 23 des Linearmotors 20 ausschließlich beim Umschalten zwischen den beiden Endlagen des Läufers 24 bestromt werden muss.

Um alternativ zu dem bistabilen Betrieb einen Betrieb des Linearmotors 20 mit einer Vorzugsrichtung zu ermöglichen, weist der Läufer 24 mindestens einen Anbindungsbereich 24.2, 24.3 für ein Betriebsart-Federelement 43, 44 auf, über welches der Läufer 24 in eine Endlage vorspannbar ist. Bei dem gezeigten Ausführungsbeispiel sind an dem Läufer zwei Anbindungsbereiche 24.2, 24.3 für solche Betriebsart-Federelemente 43, 44 vorgesehen.

An einen ersten Anbindungsbereich 24.2 kann, wie in Fig. 6a gezeigt, ein erstes Betriebsart-Federelement 43 angebunden werden, um einen Falisecure-Betrieb zu ermöglichen. Dieses erste Betriebsart-Federelement 43 spannt den Läufer 24 in eine Failsecure-Endlage vor, wobei der Läufer 24 mit dem Verriegelungsmittel 13 derart gekoppelt ist, dass das Verriegelungsmittel 13 in der Failsecure-Endlage des Läufers 24 in seiner Verriegelungsstellung angeordnet ist. Zur alternativen Verwirklichung eines Failsafe-Betriebs wird ein zweites Betriebsart-Federelement 44 an den zweiten Anbindungsbereich 24.3 angebunden. Das zweite Betriebsart-Federelement 44 spannt den Läufer 24 in eine Failsafe-Endlage vor. Der Läufer 24 ist mit dem Verriegelungsmittel 13 derart gekoppelt, dass das Verriegelungsmittel 13 in der Failsafe-Endlage des Läufers 24 in seiner Freigabestellung angeordnet ist.

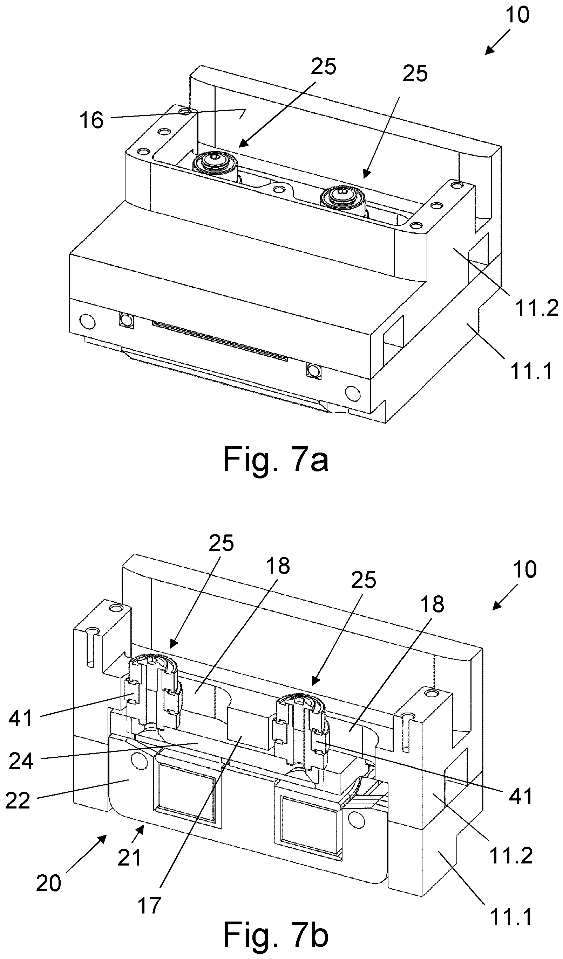

Die Darstellungen in **Fig. 7a** und **Fig. 7b** zeigen die Verriegelungseinrichtung 10, wobei die Verriegelungsmechanik 30, insbesondere das Verriegelungsmittel 13, das dritte Gehäuseteil 11.3 und das Zugmittel 13, zur besseren Sichtbarkeit des Linearmotors 20, nicht dargestellt sind. Es ist erkennbar, dass die beiden Steuerelemente 25 des Läufers 24 durch zwei separate Führungsöffnungen 18 in der Gehäusewand 17 verlaufend angeordnet sind. Das jeweilige an den Steuerelementen 25 angeordnete erste Führungswälzlager 41 kann an der Innenkontur der jeweiligen Führungsöffnung 18 abgerollt werden. Die Führungsöffnungen 18 können bei auftretendem Vandalismus, d.h. wenn über das Schiebetürelement 6 eine Kraft auf das Verrieglungsmittel 13 ausgeübt wird, Kräfte von den Steuerelementen 25 aufnehmen und in das Gehäuse 11, insbesondere das zweite Gehäuseteil 11.2 einleiten. Hierdurch kann der Linearmotor 20, insbesondere der mit den Steuerelementen 25 verbundene Läufer 24 des Linearmotors 20, vor Beschädigungen geschützt werden.

Das den ersten Gehäuseinnenraum 11.4 bildende erste Gehäuseteil 11.1 weist Wandungen auf, die einen ersten Anschlag für den Läufer 24 des Linearmotors 20 in einer ersten Endlage und einen zweiten Anschlag für den Läufer 24 in einer zweiten Endlage bilden.

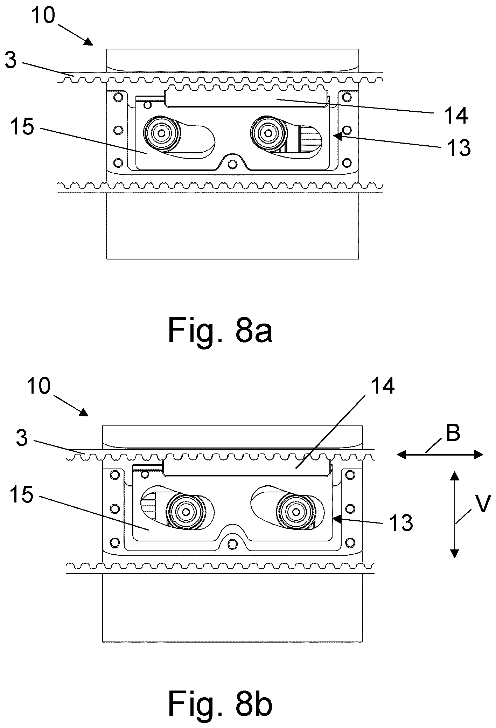

Anhand der **Fig. 8a** und **Fig. 8b** soll nachfolgend die Verriegelungsmechanik 30 der in Fig. 2-7 dargestellten Verriegelungseinrichtung 10 näher beschrieben werden. Die Verriegelungsmechanik 30 umfasst ein Verriegelungsmittel 13 welches zwischen der in Fig. 8a gezeigten Freigabestellung und der in Fig. 8b gezeigten Verriegelungsstellung hin und her bewegbar ist. Das Verriegelungsmittel weist einen Verriegelungsabschnitt 13 und ein den Verriegelungsabschnitt 14 tragendes Trägerelement 15 auf. In der Verriegelungsstellung wirkt der Verriegelungsabschnitt 14 des Verriegelungsmittels 13 kraft- und/oder formschlüssig mit dem Zugmittel 3 zusammen und arretiert damit sowohl das Zugmittel 3 als auch den mit dem Zugmittel 3 gekoppelten Laufwagen 5 der Schiebetüranlage 1. In der Freigabestellung ist der Verriegelungsabschnitt 14 hingegen von dem Zugmittel 3 beabstandet angeordnet, so dass das Zugmittel und damit auch der Laufwagen 5 freigegeben ist und sich entlang der Bewegungsrichtung B bewegen können. In der Freigabestellung liegt somit kein Form- und/oder Kraftschluss zwischen Verriegelungsmittel 13 bzw. -abschnitt 14 und dem Zugmittel 13 vor.

Bei dem Ausführungsbeispiel ist das Verriegelungsmittel 13 linear zwischen der Verriegelungsstellung und der Freigabestellung bewegbar. Hierzu ist das Verriegelungsmittel 13 linearbeweglich in dem zweiten Gehäuseinnenraum 11.5 gelagert. Die lineare Bewegung des Verriegelungsmittels 13 erfolgt dabei in einer Verriegelungsrichtung V, die senkrecht zu der Bewegungsrichtung B des Zugmittels 3 angeordnet ist. Ferner weist das Verriegelungsmittel 13, insbesondere das Trägerelement 15 zwei Führungskulissen 19, die zusammen mit den Steuerelementen 25 des Läufers 24 eine Kulissenmechanik bilden, über welche das Verriegelungsmittel 13 infolge einer Bewegung des Läufers 24 parallel zur Bewegungsrichtung B des Zugmittels 3 in eine Bewegung in der Verriegelungsrichtung V versetzt wird. Die beiden Führungskulissen 19 sind identisch ausgebildet, so dass ein unerwünschtes Verkippen des Verriegelungselements 13 verhindert werden kann.

Die Führungskulissen 19 weisen einen nicht-linearen Verlauf auf, so dass eine Bewegung des Läufers 24 parallel zur Bewegungsrichtung B des Zugmittels 3 um eine vorgegebene Distanz nicht in allen Bereichen zwischen den Endlagen des Läufers 24 in eine Bewegung des Verriegelungsmittels 13 senkrecht zur Bewegungsrichtung B um dieselbe Distanz umgesetzt wird. Vielmehr ist der nicht-lineare Verlauf der Führungskulissen derart gewählt, dass ausgehend von der Freigabestellung des Verriegelungsmittels 13 zunächst eine relativ kleine Bewegung des Läufers 24 in eine relativ große Bewegung des Verriegelungsmittels 13 umgesetzt wird. Insofern ist ein steiler Verlauf der Führungskulisse 19 gewählt. Hierdurch kann erreicht werden, dass sich das Verriegelungsmittel 13 beim Verriegeln zügig dem Zugmittel 3 annähert. Damit besteht in dem Bereich nahe der Freigabestellung eine große Hubübersetzung und eine geringe Kraftübersetzung. Dieser relativ steile Verlauf der Führungskulisse geht in Richtung der Verriegelungsstellung in einen flacheren Verlauf über, so dass eine Bewegung des Läufers 24 in einer kleineren Bewegung des Verriegelungsmittels 13 resultiert. Im Bereich der Verriegelungsstellung besteht damit eine große Kraftübersetzung und eine geringe Hubübersetzung, so dass der Verriegelungsabschnitt 14 des Verriegelungsmittels 13 mit großer Kraft in das Zugmittel 3 eingreifen und dieses verriegeln kann. Optional kann die Führungskulisse im Bereich der Verriegelungsstellung einen Verlauf aufweisen, der parallel zu der Bewegungsrichtung des Zugmittels 3 ausgerichtet ist, so dass eine erhöhte Stützwirkung gegen von außen auf das Zugmittel 3 bzw. das Verriegelungsmittel 13 einwirkende Kräfte gegeben ist.

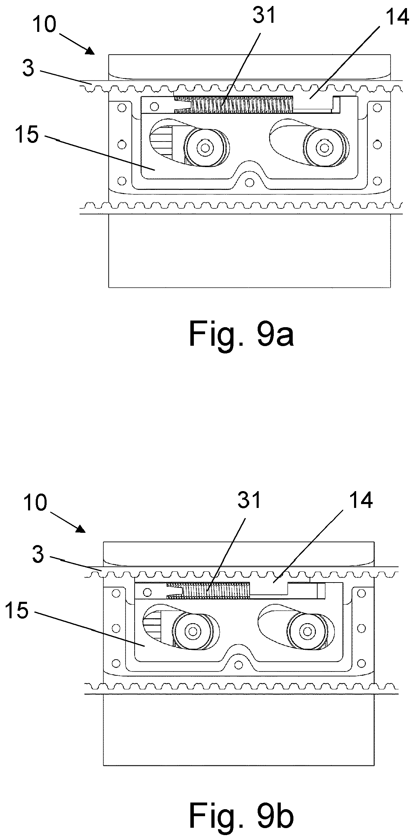

Wie in **Fig. 9a** und **Fig. 9b** zu erkennen, ist der Verriegelungsabschnitt 14 des Verriegelungsmittels 13 gegenüber dem Trägerelement 15 bewegbar gelagert. Der Verriegelungsabschnitt 14 ist parallel zu der Bewegungsrichtung B des Zugmittels 3 bewegbar an dem Trägerelement 15 gelagert, bevorzugt in einer Führung an dem Trägerelement 15. Ferner ist ein Federelement 31 vorgesehen, welches den Verriegelungsabschnitt 14 mit einer Rückstellkraft beaufschlagt. Gemäß dem Ausführungsbeispiel beaufschlagt das Federelement 31 den Verriegelungsabschnitt 14 mit einer Rückstellkraft in Richtung von der Schließposition der Schiebetüranlage 1 weg. Wird das Verriegelungsmittel 13 in Richtung seiner Verriegelungsstellung verbracht und befinden sich die Zähne des Verriegelungsabschnitts 14 vollständig in Eingriff mit den entsprechenden Aussparungen zwischen den Zähnen des Zugmittels 3, so kann sich der Verriegelungsabschnitt 14 zusammen mit dem Zugmittel 3 entgegen der Vorspannung des Federelement 31 relativ zu dem Trägerelement 15 bewegen. Somit kann das Verriegelungsmittel 3 in seine Verriegelungsstellung verbracht werden, wenn sich der Laufwagen 5 der Schiebetüranlage 1 in einer Vor-Schließposition befindet, in welcher die Schließposition noch nicht vollständig erreicht ist, insbesondere wobei die Schiebetüranlage einen Spalt weit geöffnet ist. Ausgehend von dieser Vor-Schließposition kann das Zugmittel 3 bewegt werden, um den Laufwagen 5 der Schiebetüranlage 1 in Richtung der Schließposition zu bewegen, d.h. um die Schiebetüranlage vollständig zu schließen. Dabei wird der Verriegelungsabschnitt 14 entgegen der Rückstellkraft des Federelements 31 bewegt. Bevorzugt sind das Federelement 31 bzw. Verriegelungsabschnitt 14 und/oder Trägerelement 15 derart dimensioniert, dass der Verriegelungsabschnitt mindestens um einen Verfahrweg gegenüber dem Trägerelement 15 bewegbar ist, welcher einem Abstand zweier benachbarter Zähne des Zugmittels 3 entspricht (Zahnteilung). Bei einer Bewegung des Verriegelungsmittels 13 ausgehend von der Verriegelungsstellung in Richtung der Freigabestellung kann der Verriegelungsabschnitt 14 dann durch das Federelement 31 wieder in seine Ausgangsstellung bewegt werden.

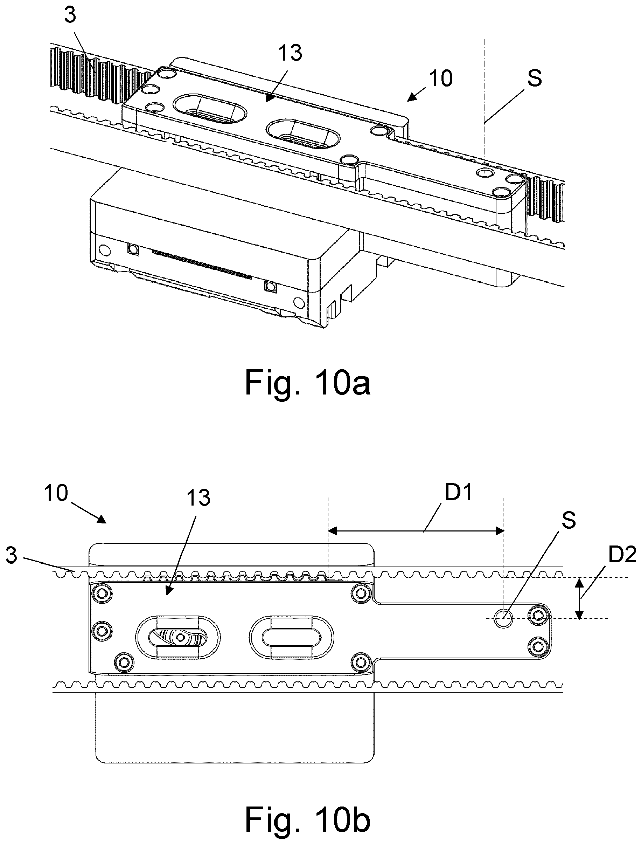

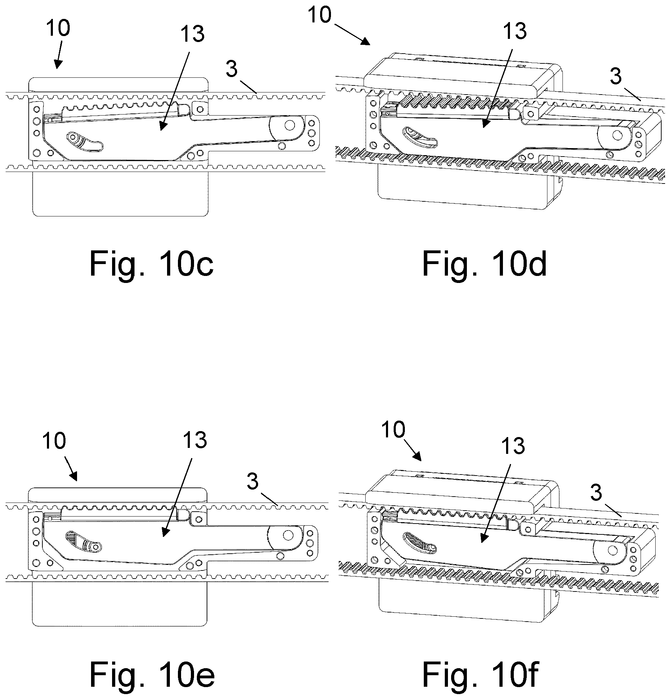

Die Darstellungen in **Fig. 10a****-f** zeigen eine Verriegelungseinrichtung 10 gemäß einem alternativen Ausführungsbeispiel, die ebenfalls geeignet ist, um bei der Schiebtüranlage 1 gemäß Fig. 1 zum Einsatz zu kommen. Die Verriegelungseinrichtung 10 gemäß diesem alternativen Ausführungsbeispiel entspricht im Wesentlichen der Verriegelungseinrichtung gemäß dem ersten Ausführungsbeispiel, weshalb auf die vorstehende Beschreibung des ersten Ausführungsbeispiels verwiesen wird. Im Unterschied zu dem ersten Ausführungsbeispiel ist bei der Verriegelungseinrichtung 10 gemäß dem alternativen Ausführungsbeispiel das Verriegelungsmittel 13 zum Bewegen zwischen der Freigabestellung und der Verriegelungsstellung um eine Schwenkachse S schwenkbar gelagert. Die Fig. 10c und 10d zeigen die Verriegelungseinrichtung 10 wobei sich das Verriegelungsmittel 13 in der Freigabestellung befindet. In den Darstellungen nach Fig. 10e und 10f befindet sich das Verriegelungsmittel 13 in der Verriegelungsstellung. Zudem weist das Verriegelungsmittel 13, bzw. das Trägerelement 15 des Verriegelungsmittels 13, nur genau eine Führungskulisse 19 auf. Entsprechend ist an dem Läufer 24 des Linearmotors 20 gemäß diesem alternativen Ausführungsbeispiel nur ein Steuerelement 25 vorgesehen, welches in Eingriff mit der einen Führungskulisse 19 steht, um das Verriegelungsmittel 13 zu schwenken.

Das Verriegelungsmittel 13 ist gemäß diesem alternativen Ausführungsbeispiel derart dimensioniert und angeordnet, dass ein Verhältnis des Abstands D1 zwischen dem Verriegelungsabschnitt 14 und der Schwenkachse S zu dem Abstand D2 zwischen dem Zugmittel 3 und der Schwenkachse S mindestens 3:1, besonders bevorzugt mindestens 4:1, beträgt.

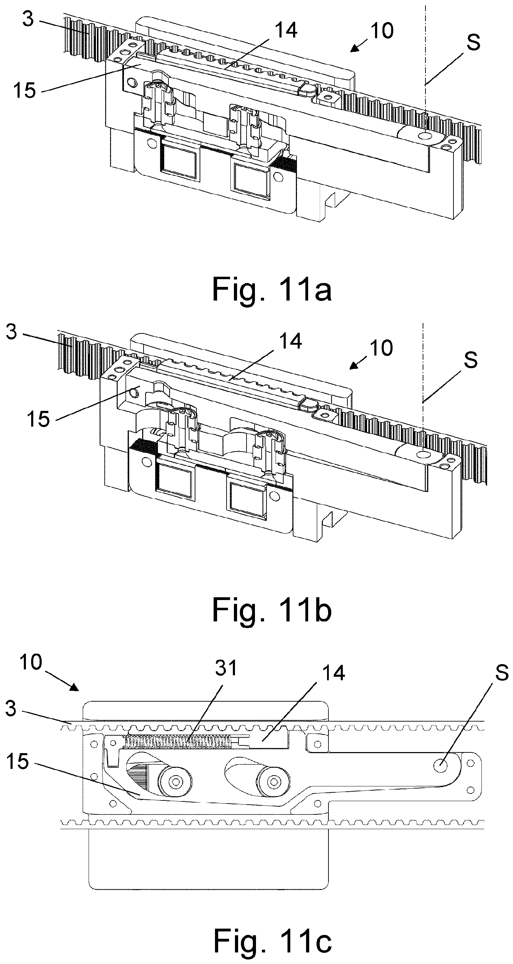

Ein weiteres alternatives Ausführungsbeispiel einer Verriegelungseinrichtung 10 ist in **Fig. 11a****-c** dargestellt. Die Verriegelungseinrichtung 10 gemäß diesem Ausführungsbeispiel entspricht im Wesentlichen der Verriegelungseinrichtung gemäß Fig. 10, wobei im Unterschied zu der Verriegelungseinrichtung gemäß Fig. 10 zwei Führungskulissen 19 und zwei Steuerelemente 25 vorgesehen sind.

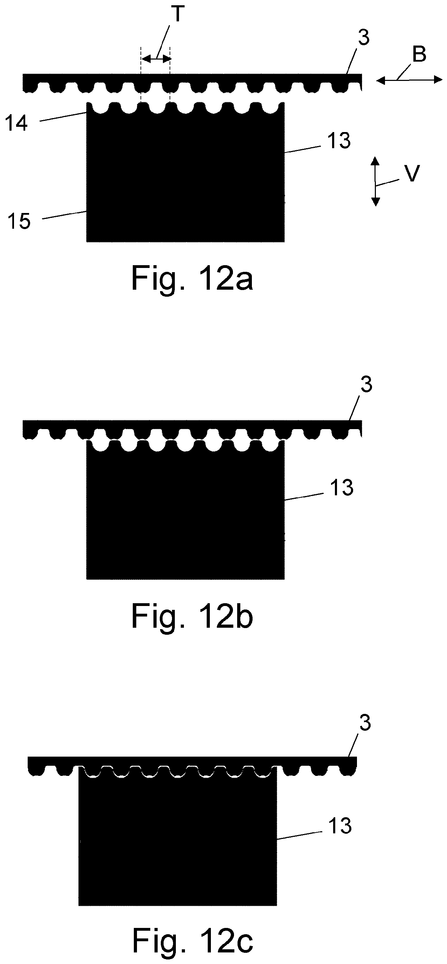

Nachfolgend soll anhand der Darstellungen in Fig. 12-17 auf Einzelheiten des Betriebs einer vorstehend beschriebenen Schiebetüranlage 1 eingegangen werden, die einen Türantrieb 9 mit einem als Zahnriemen ausgebildeten Zugmittel 3 aufweist, welcher in der Verriegelungsstellung formschlüssig mit dem Zugmittel 3 zusammenwirkt. Bei dieser Schiebetüranlage 1 ist es erforderlich, dass die Formschlusselemente, hier Zähne, des Verriegelungsmittels 13 und des Zugmittels 3 aufeinander ausgerichtet sind, um einen Formschluss zwischen Verriegelungsmittel 13 und Zugmittel zu erreichen.

Gemäß der Darstellung in **Fig. 12a** ist ein Verriegelungsmittel 13 in einer Freigabestellung gezeigt, in welcher das Verriegelungsmittel 13 in einem Abstand von dem Zugmittel 3 angeordnet ist. Das Verriegelungsmittel 13 gemäß diesem Ausführungsbeispiel weist einen Verriegelungsabschnitt 14 auf, der einstückig mit dem Trägerelement 15 ausgebildet ist. Der Abstand benachbarter Zähne des Zugmittels 3 wird im Folgenden als Zahnteilung T bezeichnet.

Die Darstellung in **Fig. 12b** zeigt den Fall, dass das Verriegelungsmittel 13 aus der in Fig. 12a gezeigten Freigabestellung entlang der Verriegelungsrichtung V bewegt wird und sich das Zugmittel 3 in der Position gemäß Fig. 12a befindet, so dass ein Eingreifen des Verriegelungsabschnitts 14, insbesondere der Zähne des Verriegelungsabschnitts 14, in die Ausnehmungen zwischen den Zähnen des Zugmittels 3 nicht möglich ist. Ein Formschluss zwischen Verriegelungsmittel 13 und Zugmittel 3 kann in dieser Stellung des Zugmittels 3 nicht erreicht werden.

In der Darstellung in **Fig. 12c** ist eine Verriegelungsposition des Zugmittels 3 dargestellt, in welcher die Zähne des Zugmittels 3 derart auf die Zähne des Verriegelungsmittels 13 ausgerichtet sind, dass diese entlang der Verriegelungsrichtung V in die Ausnehmungen zwischen den Zähnen des Zugmittels 3 bewegt werden können. Ein Formschluss zwischen Verriegelungsmittel 13 und Zugmittel 3 wird dabei erreicht.

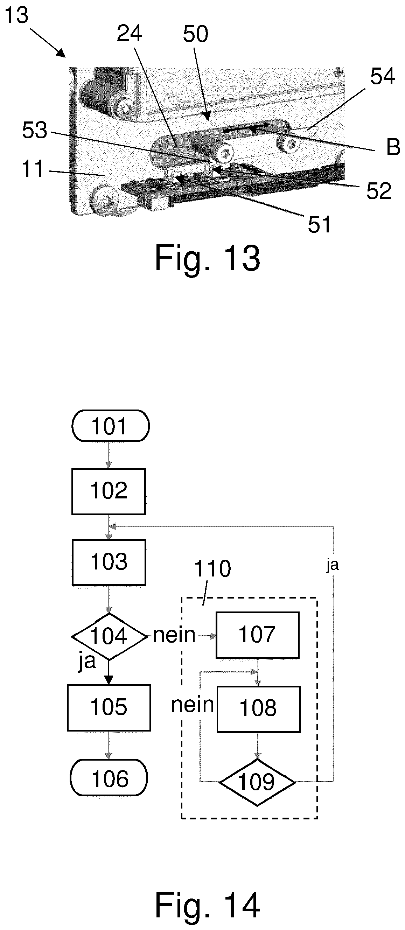

Die Darstellung in **Fig. 13** zeigt ein Ausführungsbeispiel einer Verriegelungseinrichtung 10, die einen Stellungssensor 50 zum Detektieren einer Stellung des Verriegelungsmittels 13 aufweist. Zur Detektion der Stellung des Verriegelungsmittels 13 detektiert der Stellungssensor 50 die Stellung des Läufers 24 des Linearmotors 20. Insofern wird die Stellung des Verriegelungsmittels 13 mittelbar detektiert. Fest verbunden mit dem Läufer 24 ist ein erster Detektionsbereich 53 des Stellungssensors 50 vorgesehen, der sich mit dem Läufer 24 in seiner Bewegung entlang einer Richtung parallel zur Bewegungsrichtung des Zugmittels 3 mitbewegt. Der Stellungssensor 50 umfasst ferner einen ersten Detektor 51 zum Detektieren des Läufers 24 in einer ersten Stellung bzw. ersten Endlage und einen zweiten Detektor 52 zum Detektieren des Läufers 24 in einer zweiten Stellung bzw. zweiten Endlage. Die erste Stellung des Läufers 24 entspricht der Verriegelungsstellung des Verriegelungsmittels 13 und die zweite Stellung des Läufers 24 entspricht der Freigabestellung des Verriegelungsmittels 13. Die Detektoren 51, 52 sind voneinander beabstandet angeordnet und feststehend mit dem Gehäuse 11 der Verriegelungseinrichtung 10 verbunden, so dass der erste Detektionsbereich 53 bei einer Bewegung des Läufers 24 zwischen seinen Endlagen zwischen den beiden Detektoren 51, 52 bewegt wird.

Der erste und der zweite Detektor 51, 52 sind bevorzugt als Detektionskontakte ausgebildet. Alternativ kann vorgesehen sein, dass die Detektoren 51, 52 als Lichtschranken ausgebildet sind.

Gemäß dem in Fig. 13 gezeigten Ausführungsbeispiel weist der Stellungssensor 50 einen zweiten Detektionsbereich 54 auf, der mit dem Läufer 24 fest verbunden ist. Der zweite Detektionsbereich 54 ist derart an dem Läufer 24 angeordnet, dass er in der ersten Stellung des Läufers 24, die der Verriegelungsstellung des Verriegelungsmittels 13 entspricht, mit einem in den Zeichnungen nicht dargestellten Schalter, insbesondere Mikroschalter zusammenwirkt. Bei dem Schalter handelt es sich bevorzugt um einen Schalter, der zum Betrieb keine Stromversorgung erfordert, so dass die Verriegelungsstellung des Verriegelungsmittels 13 auch bei einem Stromausfall mittels des zweiten Detektionsbereichs 54 und des Schalters detektiert werden kann.

In der **Fig. 14** ist ein Ablaufdiagramm eines Verfahrens zum Betrieb einer Schiebetüranlage 1 dargestellt, bei welchem eine Verriegelungs-Referenzposition des Zugmittels 3 ermittelt und gespeichert wird. In einem Ausgangsschritt 101 befindet sich das Schiebetürelement 6 in seiner Schließposition. In einem Andrückschritt 102 wird das Schiebetürelement 6, insbesondere mit einer vorgegebenen Andrückkraft, in Richtung seiner Schließstellung angedrückt. In einem nachfolgenden Auslöseschritt 103 wird dann ein Verriegelungsbefehl zum Bewegen des Verriegelungsmittels 13 in die Verriegelungsstellung an die Verriegelungseinrichtung 10 übermittelt. Daraufhin wird der Linearmotor 20 betätigt, so dass sich der Läufer 24 des Linearmotors 20 von seiner einen Endlage in seine andere Endlage bewegt und dabei das Verriegelungsmittel 13 von der Freigabestellung in Richtung seiner Verriegelungsstellung verbringt.

In einem dem Auslöseschritt 103 nachfolgenden Detektionsschritt 104 wird mittels eines Stellungssensors der Verriegelungseinrichtung 10 die Stellung des Verriegelungsmittels 13 detektiert. Falls ermittelt wird, dass sich das Verriegelungsmittel nicht in seiner in Fig. 12c gezeigten Verriegelungsstellung befindet, so wird das Zugmittel 3 in einem dem Detektionsschritt 104 nachfolgenden Bewegungsschritt 110 um eine vorgegebene Weglänge gegenüber dem Verriegelungsmittel 13 bewegt. In einem ersten Teilschritt 107 des Bewegungsschritts 110 wird eine Soll-Position des Zugmittels 13 gesetzt, die um die vorgegebene Weglänge von der derzeitigen Ist-Position des Zugmittels 3 abweicht. Die vorgegebene Weglänge ist dabei kleiner gewählt als die Zahnteilung T. In einem zweiten Teilschritt 108 wird das Zugmittel 3 in die Soll-Position bewegt. In einem dritten Teilschritt 109 wird mittels eines Weggebers des Elektromotors 2 des Türantriebs 9 geprüft, ob die Soll-Position erreicht ist. Ist die Soll-Position nicht erreicht, so wird das Zugmittel 3 so lange in Richtung der Soll-Position bewegt, bis diese erreicht ist.

Nach dem Bewegungsschritt 110 werden der Auslöseschritt 103 und der Detektionsschritt 104 so lange wiederholt bis in dem Detektionsschritt 104 detektiert worden ist, dass sich das Verriegelungsmittel 13 in der Verriegelungsstellung befindet. Dann wird in einem Speicherschritt 105 die Position des Zugmittels 3 als Verriegelungs-Referenzposition gespeichert. Diese Verriegelungs-Referenzposition kann nachfolgend zur Berechnung weiterer Verriegelungspositionen des Zugmittels 3 herangezogen werden. In dem Endzustand 106 ist der Türantrieb 9 der Schließanlage 1 verriegelt.

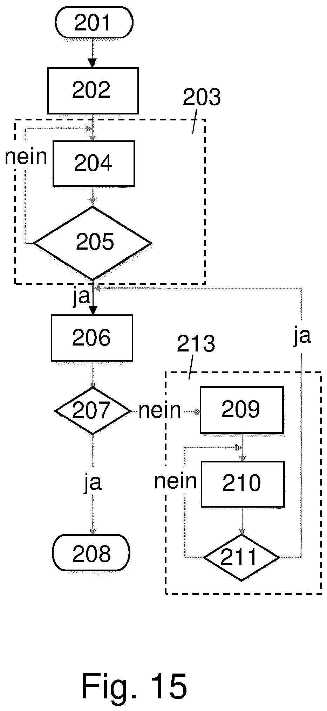

Die Darstellung in **Fig. 15** zeigt ein Ablaufdiagramm eines Verfahrens zum Betrieb einer Schiebetüranlage 1, bei welchem der Türantrieb 9 in einer weiteren Verriegelungsposition des Zugmittels 3 verriegelt wird. Diese weitere Verriegelungsposition ist nicht identisch mit der Verriegelungs-Referenzposition des Zugmittels 3. In einem Ausgangsschritt 201 erhält der Türantrieb einen Bewegungsbefehl zum Bewegen des Schiebetürelements 6 bzw. des Zugmittels 3 in eine vorgegebene Zielposition. In einem Berechnungsschritt 202 wird dann in Abhängigkeit von der gespeicherten Verriegelungs-Referenzposition eine weitere Verriegelungsposition berechnet, die möglichst nah an der vorgegebenen Zielposition liegt. In einem weiteren Bewegungsschritt 203 wird dann das Zugmittel 3 in Richtung dieser weiteren Verriegelungsposition bewegt. Hierbei wird das Zugmittel 3 in einem ersten Teilschritt 204 in Richtung der Verriegelungsposition bewegt. In einem zweiten Teilschritt 205 wird mittels des Weggebers des Elektromotors 2 überprüft, ob ein vorgegebener Abstand zu der Verriegelungsposition unterschritten ist. Ist der vorgegebene Abstand zu der Verriegelungsposition nicht unterschritten, so wird das Zugmittel 3 so lange in Richtung der Verriegelungsposition bewegt, bis dies der Fall ist.

Nach dem Bewegungsschritt 203 wird in einem Auslöseschritt 206 ein Verriegelungsbefehl zum Bewegen des Verriegelungsmittels 13 in die Verriegelungsstellung an die Verriegelungseinrichtung 10 übermittelt während sich das Zugmittel 3 in Bewegung befindet. In einem dem Auslöseschritt 206 nachfolgenden Detektionsschritt 207 wird mittels des Stellungssensors 50 der Verriegelungseinrichtung 10 die Stellung des Verriegelungsmittels 13 detektiert. Falls ermittelt wird, dass sich das Verriegelungsmittel nicht in seiner in Fig. 12c gezeigten Verriegelungsstellung befindet, so wird das Zugmittel 3 in einem dem Detektionsschritt 207 nachfolgenden Bewegungsschritt 213 um eine vorgegebene Weglänge gegenüber dem Verriegelungsmittel 13 bewegt. In einem ersten Teilschritt 209 des Bewegungsschritts 213 wird eine Soll-Position des Zugmittels 13 gesetzt, die um die vorgegebene Weglänge von der derzeitigen Ist-Position des Zugmittels 3 abweicht. Die vorgegebene Weglänge ist dabei kleiner gewählt ist als die Zahnteilung T. In einem zweiten Teilschritt 210 wird das Zugmittel 3 in die Soll-Position bewegt. In einem dritten Teilschritt 211 wird mittels eines Weggebers des Elektromotors 2 des Türantriebs 9 geprüft, ob die Soll-Position erreicht ist. Ist die Soll-Position nicht erreicht, so wird das Zugmittel 3 so lange in Richtung der Soll-Position bewegt, bis diese erreicht ist.

Nach dem Bewegungsschritt 213 werden der Auslöseschritt 206 und der Detektionsschritt 207 so lange wiederholt bis in dem Detektionsschritt 207 detektiert worden ist, dass sich das Verriegelungsmittel 13 in der Verriegelungsstellung befindet (Endzustand 208).

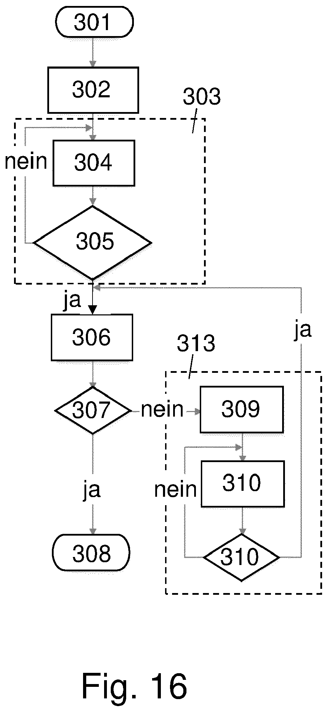

Die Darstellung in **Fig. 16** zeigt ein Ablaufdiagramm eines alternativen Verfahrens zum Betrieb einer Schiebetüranlage 1, bei welchem der Türantrieb 9 in einer weiteren Verriegelungsposition des Zugmittels 3 verriegelt wird. In einem Ausgangsschritt 301 erhält der Türantrieb einen Bewegungsbefehl zum Bewegen des Schiebetürelements 6 bzw. des Zugmittels 3 in eine vorgegebene Zielposition. In einem Berechnungsschritt 302 wird dann in Abhängigkeit von der gespeicherten Verriegelungs-Referenzposition eine weitere Verriegelungsposition berechnet, die möglichst nah an der vorgegebenen Zielposition liegt. In einem weiteren Bewegungsschritt 303 wird dann das Zugmittel 3 in Richtung dieser weiteren Verriegelungsposition bewegt. Hierbei wird das Zugmittel 3 in einem ersten Teilschritt 304 in Richtung der Verriegelungsposition bewegt. In einem zweiten Teilschritt 305 wird mittels des Weggebers des Elektromotors 2 überprüft, ob die Verriegelungsposition erreicht ist. Ist die Verriegelungsposition nicht erreicht, so wird das Zugmittel 3 so lange in Richtung der Verriegelungsposition bewegt, bis diese erreicht ist.

Nach dem Bewegungsschritt 303 wird in einem Auslöseschritt 306 ein Verriegelungsbefehl zum Bewegen des Verriegelungsmittels 13 in die Verriegelungsstellung an die Verriegelungseinrichtung 10 übermittelt. In einem dem Auslöseschritt 306 nachfolgenden Detektionsschritt 207 wird mittels des Stellungssensors 50 der Verriegelungseinrichtung 10 die Stellung des Verriegelungsmittels 13 detektiert. Falls ermittelt wird, dass sich das Verriegelungsmittel nicht in seiner in Fig. 12c gezeigten Verriegelungsstellung befindet, so wird das Zugmittel 3 in einem dem Detektionsschritt 307 nachfolgenden Bewegungsschritt 313 um eine vorgegebene Weglänge gegenüber dem Verriegelungsmittel 13 bewegt. In einem ersten Teilschritt 309 des Bewegungsschritts 313 wird eine Soll-Position des Zugmittels 13 gesetzt, die um die vorgegebene Weglänge von der derzeitigen Ist-Position des Zugmittels 3 abweicht. Die vorgegebene Weglänge ist dabei kleiner gewählt ist als die Zahnteilung T. In einem zweiten Teilschritt 310 wird das Zugmittel 3 in die Soll-Position bewegt. In einem dritten Teilschritt 311 wird mittels eines Weggebers des Elektromotors 2 des Türantriebs 9 geprüft, ob die Soll-Position erreicht ist. Ist die Soll-Position nicht erreicht, so wird das Zugmittel 3 so lange in Richtung der Soll-Position bewegt, bis diese erreicht ist.

Nach dem Bewegungsschritt 313 werden der Auslöseschritt 306 und der Detektionsschritt 307 so lange wiederholt bis in dem Detektionsschritt 307 detektiert worden ist, dass sich das Verriegelungsmittel 13 in der Verriegelungsstellung befindet (Endzustand 308).

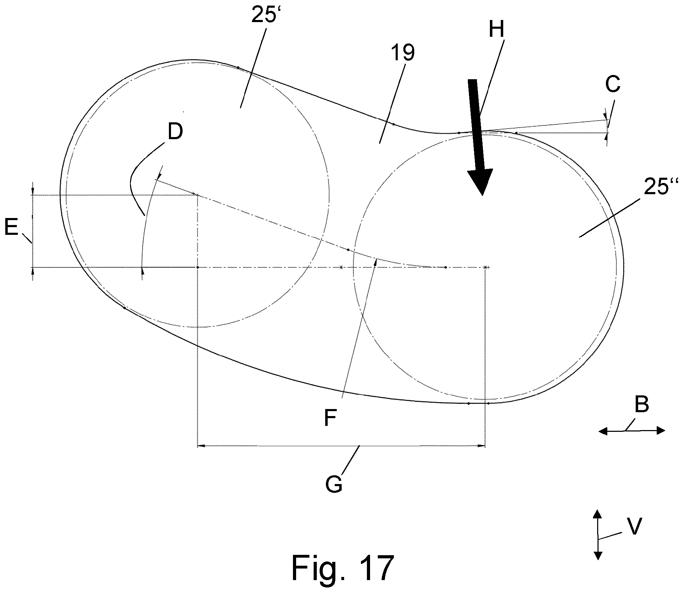

In der **Fig. 17** ist ein weiteres Ausführungsbeispiel einer Führungskulisse 19 einer Kulissenmechanik gezeigt, die bei der Erfindung Anwendung finden kann. Die Führungskulisse 19 kann in dem Verriegelungsmittel 13 vorgesehen sein. Die Führungskulisse 19 ist als Langloch mit einem gebogenen Verlauf ausgebildet. Der Radius der Biegung des Verlaufs ist mit dem Bezugszeichen F bezeichnet. Die Darstellung in Fig. 17 zeigt das Steuerelement 25' links in einer Stellung, in der es sich befindet, wenn das Verriegelungsmittel 13 in seiner Freigabestellung ist. Ferner ist das Steuerelement 25" rechts in einer Stellung gezeigt, in der es sich befindet, wenn das Verriegelungsmittel 13 in seiner Verriegelungsstellung ist. Der Hubweg ist mit dem Bezugszeichen E bezeichnet, der Verfahrweg parallel zur Bewegungsrichtung B des Zugmittels 3 ist mit dem Bezugszeichen G bezeichnet. D ist der Hubwinkel. Um ein unerwünschtes Herausrutschen des Verriegelungsmittels 13 aus seiner Verriegelungsstellung bei einer Krafteinwirkung beispielsweise durch Vandalismus zu erschweren, weist die Führungskulisse 19, insbesondere in ihrem dem Verriegelungsabschnitt 14 zugewandten Bereich, einen Winkel C auf. Durch den Winkel C wird eine schräg zur Bewegungsrichtung B des Zugmittels 3 und schräg zur Verriegelungsrichtung V stehende Fläche gebildet, die in der Verriegelungsstellung mit dem Steuerelement 25" zusammenwirkt. In Fig. 17 ist erkennbar, dass es aufgrund des Winkels C zu einer Kraftwirkung in einer Richtung H kommt, die einen spitzen Winkel mit der Verriegelungsrichtung V bildet. Hierdurch wird ein Herausdrücken des Verriegelungsmittels 13 aus der Verriegelungsstellung erschwert.

### Bezugszeichenliste

- 1: Schiebetüranlage
- 2: Elektromotor
- 3: Zugmittel
- 4: Umlenkelement
- 5: Laufwagen
- 6: Schiebetürelement
- 7: Wandelement
- 8: Boden
- 9: Türantrieb
- 10: Verriegelungseinrichtung
- 11: Gehäuse
- 11.1: Gehäuseteil
- 11.2: Gehäuseteil
- 11.3: Gehäuseteil
- 11.4: Gehäuseinnenraum
- 11.5: Gehäuseinnenraum
- 11.6: Gehäuse-Ausnehmung
- 12.1: Zugmittel-Ausnehmung
- 12.2: Zugmittel-Ausnehmung
- 13: Verriegelungsmittel
- 14: Verriegelungsabschnitt
- 15: Trägerelement
- 16: Anschlag
- 17: Gehäusewand
- 18: Führungsöffnung
- 19: Führungskulisse
- 20: Verriegelungsantrieb, Linearmotor
- 21: Stator
- 21.1: Stator-Ausnehmung
- 22: Statorkern
- 22.1: Statorzahn
- 22.2: Statorzahn
- 23: Spule
- 24: Läufer
- 24.1: Abrollfläche
- 24.2: Anbindungsbereich
- 24.3: Anbindungsbereich
- 25: Steuerelement
- 25': Steuerelement
- 25": Steuerelement
- 26: Wälzlager
- 26.1: Lagerring
- 26.2: Lagerring
- 27: Befestigungselement
- 28: Permanentmagnet
- 30: Verriegelungsmechanik
- 31: Federelement
- 41: Führungswälzlager
- 42: Führungswälzlager
- 43: Betriebsart-Federelement
- 44: Betriebsart-Federelement
- 50: Stellungssensor
- 51: Detektor
- 52: Detektor
- 53: Detektionsbereich
- 54: Detektionsbereich
- 101: Ausgangsschritt
- 102: Andrückschritt
- 103: Auslöseschritt
- 104: Detektionsschritt
- 105: Speicherschritt
- 106: Endzustand
- 107: Teilschritt
- 108: Teilschritt
- 109: Teilschritt
- 110: Bewegungsschritt
- 201: Ausgangsschritt
- 202: Berechnungsschritt
- 203: Bewegungsschritt
- 204: Teilschritt
- 205: Teilschritt
- 206: Auslöseschritt
- 207: Detektionsschritt
- 208: Endzustand
- 209: Teilschritt
- 210: Teilschritt
- 211: Teilschritt
- 213: Bewegungsschritt
- 301: Ausgangsschritt
- 302: Berechnungsschritt
- 303: Bewegungsschritt
- 304: Teilschritt
- 305: Teilschritt
- 306: Auslöseschritt
- 307: Detektionsschritt
- 308: Endzustand
- 309: Teilschritt
- 310: Teilschritt
- 311: Teilschritt
- 313: Bewegungsschritt
- B: Bewegungsrichtung
- C: Winkel
- D: Hubwinkel
- D1: Abstand
- D2: Abstand
- E: Hubweg
- F: Radius
- G: Verfahrweg
- H: Kraft
- PM: Permanentmagnet-Breite
- T: Zahnteilung
- Z1: Zahnbreite
- Z2: Zahnbreite
- V: Verriegelungsrichtung

## Patentansprüche

1. Linearmotor zum Bewegen eines Verriegelungsmittels (13) zwischen einer Freigabestellung und einer Verriegelungsstellung, umfassend ein Gehäuse (11), einen in dem Gehäuse (11) angeordneten Stator (21) und einen gegenüber dem Stator (21) translatorisch bewegbaren Läufer (24), wobei der Läufer (24) mittels mehrerer, insbesondere vier, an dem Stator (21) und/oder an dem Gehäuse (11) angeordneter Wälzlager (26) oder Gleitlager bewegbar gelagert ist.

2. Linearmotor nach Anspruch 1,
**dadurch gekennzeichnet, dass**
die Wälzlager (26) oder Gleitlager jeweils einen Lagerring (26.1) aufweisen, an dem eine Abrollfläche (24.1) des Läufers (24) anliegt.

3. Linearmotor nach einem der vorhergehenden Ansprüche,
**dadurch gekennzeichnet, dass**
jeweils zwei der Wälzlager (26) oder Gleitlager an einem gemeinsamen Befestigungselement (27), insbesondere einer Achse, befestigt sind, welche in einer Stator-Ausnehmung (21.1) in dem Stator (21) und/oder in einer Gehäuse-Ausnehmung (11.6) in dem Gehäuse (11) angeordnet ist.

4. Linearmotor nach einem der vorhergehenden Ansprüche,
**dadurch gekennzeichnet, dass**
der Stator (21) einen Statorkern (22) mit drei, bevorzugt genau drei, Statorzähnen (22.2, 22.2) aufweist, die in einer Bewegungsrichtung (B) des Läufers (24) voneinander beabstandet sind, wobei ein erster Statorzahn (22.1) der Statorzähne (22.1, 22.2) zwischen zwei zweiten Statorzähnen (22.2) der Statorzähne (22.1, 22.2) angeordnet ist, wobei die beiden zweiten Statorzähne (22.2) jeweils eine Stator-Ausnehmung (21.1) umfassen, in welcher ein Befestigungselement (27), insbesondere eine Achse, angeordnet ist, an dem jeweils zwei der Wälzlager (26) oder Gleitlager befestigt sind.

5. Linearmotor nach Anspruch 4,
**dadurch gekennzeichnet, dass**
ein erster Statorzahn (22.1) der Statorzähne (22.1, 22.2), der zwischen zwei zweiten Statorzähnen (22.2) der Statorzähne (22.1, 222.) angeordnet ist, eine erste Zahnbreite (Z1) aufweist, die größer ist als eine zweite Zahnbreite (Z2) der zweiten Statorzähne (22.2).

6. Linearmotor nach Anspruch 5,
**dadurch gekennzeichnet, dass**
der Läufer (24) zwei, bevorzugt genau zwei, Permanentmagnete (28) mit gegenläufiger Magnetisierungsrichtung aufweist, wobei die Permanentmagnete (28) eine identische Permanentmagnet-Breite (PM) aufweisen, wobei ein Verhältnis der Permanentmagnet-Breite (PM) zu der ersten Zahnbreite (Z1) größer ist als 1, bevorzugt größer ist als 1,1, besonders bevorzugt größer ist als 1,2, beispielsweise 1,4.

7. Linearmotor nach einem der vorhergehenden Ansprüche,
**dadurch gekennzeichnet, dass**
der Statorkern (22) als Blechpaket ausgebildet ist.

8. Linearmotor nach einem der vorhergehenden Ansprüche,
**dadurch gekennzeichnet, dass**
das Gehäuse (11) einen ersten Anschlag für den Läufer (24) in einer ersten Endlage und bevorzugt einen zweiten Anschlag für den Läufer (24) in einer zweiten Endlage aufweist.

9. Linearmotor nach einem der vorhergehenden Ansprüche,
**dadurch gekennzeichnet, dass**
der Läufer (24) mindestens einen Anbindungsbereich (24.2, 24.3) für ein Betriebsart-Federelement (43, 44) aufweist, über welches der Läufer (24) in eine Endlage vorspannbar ist.

10. Verriegelungseinrichtung (10) für eine Schiebetüranlage (1), umfassend einen Linearmotor (20) nach einem der vorhergehenden Ansprüche und ein Verriegelungsmittel (13), welches zwischen einer Freigabestellung und einer Verriegelungsstellung hin und her bewegbar ist.

11. Verriegelungseinrichtung nach Anspruch 10,
**dadurch gekennzeichnet, dass**
der Linearmotor (20) ein Betriebsart-Federelement (43, 44) aufweist,
- über welches der Läufer (24) in eine Failsafe-Endlage vorspannbar ist, wobei der Läufer (24) mit dem Verriegelungsmittel (13) derart gekoppelt ist, dass das Verriegelungsmittel (13) in der Failsafe-Endlage des Läufers (24) in einer Freigabestellung angeordnet ist.; oder
- über welches der Läufer (24) in eine Failsecure-Endlage vorspannbar ist, wobei der Läufer (24) mit dem Verriegelungsmittel (13) derart gekoppelt ist, dass das Verriegelungsmittel (13) in der Failsecure-Endlage des Läufers (24) in einer Verriegelungsstellung angeordnet ist.

12. Schiebetüranlage umfassend
einen Türantrieb (9) mit einem Zugmittel (3), insbesondere einem Riemen, einem Seil oder einer Kette, ein Schiebetürlaufwerk mit einem verfahrbaren Laufwagen (5) für ein Schiebetürelement (6), welcher mit dem Zugmittel (3) gekoppelt und ausgehend von einer Schließposition über eine Wegstrecke in zumindest eine vorbestimmte Offenposition verfahrbar ist, und eine Verriegelungseinrichtung (10) zur Verriegelung des Türantriebs (9) nach einem der Ansprüche 10 oder 11.

13. Verfahren zum Herstellen eines Linearmotors zum Bewegen eines Verriegelungsmittels (13) zwischen einer Freigabestellung und einer Verriegelungsstellung, wobei ein Gehäuse (11) bereitgestellt wird und wobei in dem Gehäuse (11) ein Stator (21) sowie ein gegenüber dem Stator (21) translatorisch bewegbaren Läufer (24) angeordnet wird, wobei der Läufer (24) mittels mehrerer, insbesondere vier, an dem Stator (21) und/oder an dem Gehäuse (11) angeordneter Wälzlager (26) oder Gleitlager bewegbar gelagert wird.

14. Verfahren zur Herstellung eines Linearmotors nach Anspruch 13,
**dadurch gekennzeichnet, dass**
mehrere Einzelbleche auf mindestens ein gemeinsames Befestigungselement (27), aufgesteckt werden, um einen Statorkern (22) des Stators (21) zu bilden.

15. Verfahren zur Herstellung eines Linearmotors nach Anspruch 14,
**dadurch gekennzeichnet, dass**
die Wälzlager (26) auf freien Enden des mindestens einen Befestigungselements (27) aufgebracht werden.
